# FASCICULE DE BREVET EUROPEEN

(11) **EP 1 523 266 B1**
(45) Date de publication et mention de la délivrance du brevet: **14.11.2007**
(21) Numéro de dépôt: 03755611.5
(22) Date de dépôt: 16.07.2003
(51) Int. Cl.: A47J 45/10

(54) **DISPOSITIF AMOVIBLE DE PREHENSION EN TOUTE SECURITE**
ABNEHMBARE VORRICHTUNG ZUM SICHEREN GREIFEN
SECURE REMOVABLE GRIPPING DEVICE

(30) Priorité: 24.07.2002 FR 0209386
(43) Date de publication de la demande: 20.04.2005
(73) Titulaire: SEB SA, 69130 Ecully (FR)
(72) Inventeur: LORTHIOIR, Christophe, 74150 Bloye (FR); MONTGELARD Michel, F-74960 Cran Gevrier (FR)
(74) Mandataire: Pichat, Thierry
(86) Numéro de dépôt international: PCT/FR2003/002247
(87) Numéro de publication internationale: WO 2004/014207

(56) Documents cités:
- FR-A- 2 739 772
- US-A- 1 901 729
- US-A- 2 808 284
- US-B1- 6 318 776

## Description

La présente invention concerne un dispositif amovible de préhension pour récipient, notamment un manche amovible pour casserole, et en toute sécurité.

On connaît un dispositif de préhension amovible pour récipient, du type comprenant deux organes formant pince montés sur un corps de préhension, l'un des organes formant pince étant mobile en translation par rapport au corps de préhension, selon une direction sensiblement parallèle à la direction longitudinale du corps de préhension, entre une position ouverte et une position fermée dans laquelle les organes formant pince sont adaptés à pincer un rebord du récipient, le dispositif de préhension amovible comprenant des moyens de déplacement qui sont adaptés à déplacer les organes formant pince l'un par rapport à l'autre, qui comportent un levier monté mobile en rotation par rapport au corps de préhension entre une position déployée et une positon escamotée dans laquelle l'organe mobile formant pince est en position fermée, et un moyen de transmission s'étendant entre le levier et l'organe mobile formant pince adapté à déplacer l'organe mobile formant pince en translation quand le levier est pivoté, et qui sont conformés de sorte que le levier est dans une position d'équilibre stable quand il est dans ses positions escamotée et déployée, et passe par une position intermédiaire d'équilibre instable quand il pivote de l'une à l'autre de ses deux positions d'équilibre stable.

De tels dispositifs amovible de préhension sont décrits dans les demandes de brevet FR 2 739 772 et FR 2 768 914.

Dans ces dispositifs antérieurs connus, lors d'une manipulation brusque d'un dispositif de préhension amovible, les organes formant pince peuvent passer de façon intempestive de leur position fermée à leur position ouverte, surtout si, quand les organes formant pince sont en position fermée, les moyens de déplacement sont proches de la position d'équilibre à partir de laquelle les organes formant pince sont entraînés vers leur position ouverte, ce qui fait prendre le risque à l'opérateur de recevoir le contenu du récipient sur lui-même et peut-être de se brûler.

On connaît aussi par le brevet US 6 318 776 un dispositif de préhension du type précité comprenant des moyens de verrouillage distincts des moyens de déplacement, mobiles entre une position activée et une position de verrouillage dans laquelle ils sont adaptés à gêner le pivotement involontaire du levier jusqu'à sa position d'équilibre instable. Selon ce document, les moyens de verrouillage sont formés par une bille montée coulissante sur le corps de préhension et adaptée à se loger partiellement sur une cavité réalisée sur le levier, quand le levier est en position fermée. A chaque pivotement volontaire du levier dans un sens ou dans l'autre, la forme de la cavité et la force du ressort reliant la bille au corps de préhension permettent le coulissement de la bille qui passe ainsi dans sa position activée. Bien évidemment, ces moyens de verrouillage ne sont pas capables d'empêcher toute ouverture du levier, à partir d'une certaine force subie par le levier.

Le problème posé est ainsi de réaliser un dispositif de préhension amovible selon lequel les organes formant pince ne peuvent pas passer de façon intempestive de leur position fermée à leur position ouverte, même dans les circonstances indiquées ci-dessus et assurant donc une plus grande sécurité d'utilisation.

La solution proposée à ce problème est un dispositif de préhension du type précité dont les moyens de verrouillage sont adaptés à empêcher tout pivotement du levier jusqu'à sa position d'équilibre instable et comprennent un bouton d'activation adapté à être manoeuvré manuellement pour permettre l'entraînement des moyens de verrouillage à leur position activée dans laquelle le levier peut passer de sa position escamotée vers sa position déployée.

De cette façon, le verrouillage du levier dans sa position escamotée empêche l'ouverture des organes formant pince, même si l'utilisateur manipule brusquement le dispositif de préhension.

Selon un mode de réalisation particulier, les moyens de verrouillage en position activée sont plus proches des organes formant pince qu'en position de verrouillage.

Par cet agencement, pour déverrouiller les moyens de verrouillage, l'utilisateur doit éloigner les moyens de verrouillage des organes formant pince. Cette manoeuvre étant moins naturelle que de rapprocher les moyens de verrouillage des organes formant pince, les risques de déverrouillage du levier par inadvertance sont considérablement réduits.

Selon un autre mode de réalisation particulier, les moyens de verrouillage en position activée sont adaptés à faire passer le levier de sa position escamotée vers sa position déployée.

Par cet arrangement, l'utilisateur déverrouille le levier puis, dans la continuité du mouvement, entraîne le levier vers sa position déployée et les organes formant pince vers leurs position ouverte. De cette façon, l'utilisateur peut manoeuvrer les moyens de verrouillage et déployer le levier sans avoir à changer de prise de main.

Selon un autre mode de réalisation particulier, le dispositif de préhension comprend un arbre autour duquel sont articulés le levier et le moyen de transmission, qui est situé à proximité de l'extrémité du levier opposée à celle par laquelle le levier est relié au corps de préhension, et qui est mobile en translation dans une fente réalisée dans le moyen de transmission à proximité de l'extrémité du moyen de transmission opposée à celle par laquelle le moyen de transmission est relié à l'organe mobile formant pince.

Par cet agencement particulier des moyens de déplacement, le dispositif de préhension peut pincer de façon sûre des rebords de récipient dont l'épaisseur peut varier selon une plage relativement importante, entre 0,5 et 3,5 mm (ce qui correspond sensiblement à l'amplitude de mouvement de l'arbre dans la fente).

Selon un autre mode de réalisation, le levier et le moyen de transmission sont de longueur réduite, ce qui permet à l'utilisateur d'avoir toujours une emprise sur le corps de préhension par son annulaire et son auriculaire, seuls l'index et le majeur étant disposés au niveau du levier, et ce qui diminue l'amplitude du mouvement du levier.

Selon un autre agencement particulier un ressort à boudin, logé dans le moyen de transmission, est utilisé comme moyen élastique du mécanisme à genouillère. De ce fait, contrairement aux dispositifs de préhension de l'art antérieur comprenant un ressort à lame formant bielle, il n'y a pas de risque de détérioration quand le rebord du récipient pincé est de forte épaisseur.

La faible amplitude du mouvement du levier permet de munir le levier et le moyen de transmission de parois verticales agencées de sorte que, même quand le levier est en position déployée, l'ensemble du mécanisme est masqué et protégé de tout encrassement.

D'autres particularités de l'invention résulteront de la description détaillée qui va suivre.

Aux dessins annexés à titre d'exemple non limitatif :
- La figure 1 est une vue éclatée en perspective d'un dispositif de préhension amovible conforme à la présente invention ;
- La figure 2 est une vue en coupe longitudinale d'un dispositif de préhension amovible, les organes formant pince étant en position fermée ; et
- La figure 3 est une vue en coupe longitudinale d'un dispositif de préhension amovible, les organes formant pince étant en position ouverte.

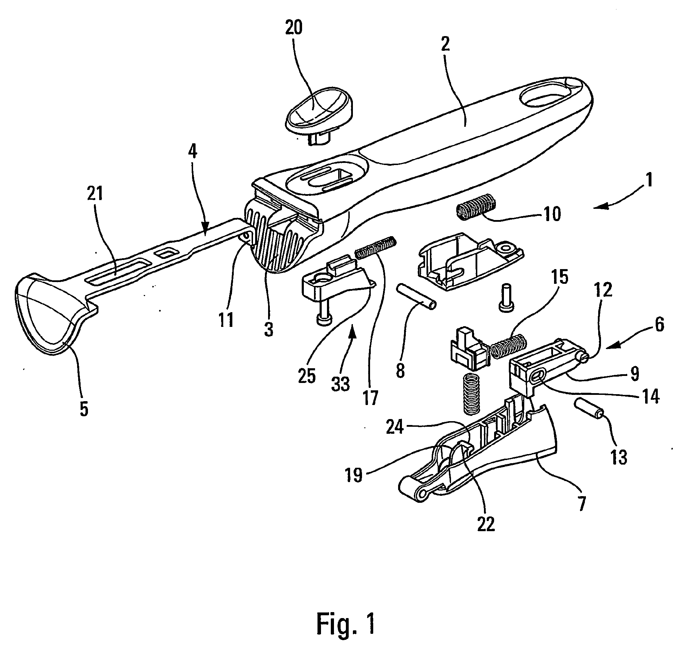

Comme on peut le voir à la figure 1, un dispositif de préhension amovible 1 pour récipient (par exemple un manche amovible pour une casserole) comprend un corps de préhension 2 sur lequel sont montés deux organes formant pince 3,4.

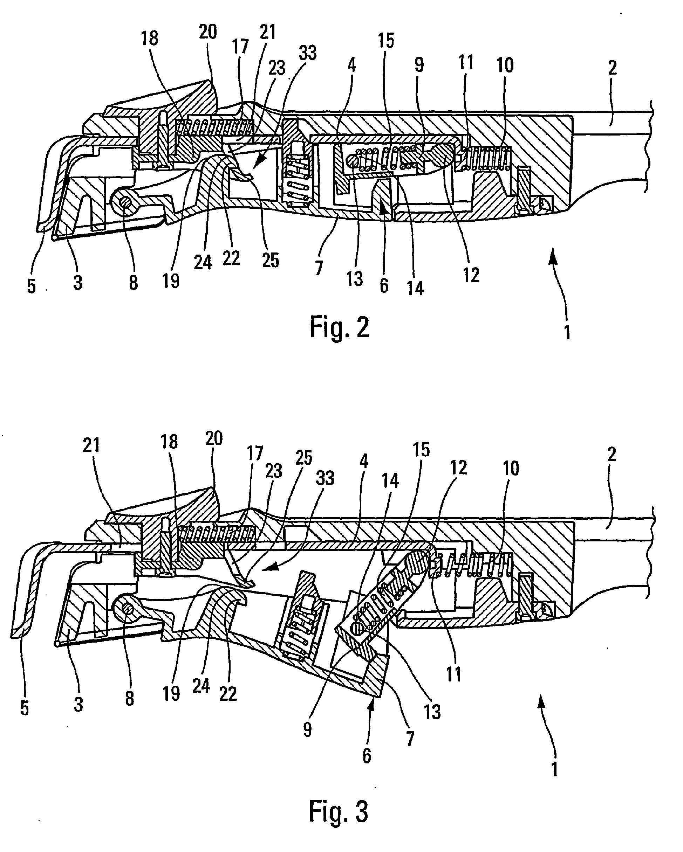

Un premier organe formant pince 3 est fixé à une extrémité du corps de préhension 2, et le second organe formant pince 4 est monté mobile en translation par rapport au corps de préhension 2, entre une position ouverte (figure 3) et une position fermée (figure 2).

L'organe mobile formant pince 4 comprend une extrémité de serrage 5 qui est adaptée, avec l'organe fixe formant pince 3, à pincer un rebord du récipient quand l'organe mobile formant pince 4 est en position fermée.

Dans le présent mode de réalisation, l'organe fixe formant pince 3 et l'extrémité de serrage 5 de l'organe mobile formant pince 4 sont conformées de façon à pouvoir pincer des récipients dont l'extrémité supérieure du rebord est incurvée vers l'extérieur et forme ainsi une courte collerette courbe.

Un ressort d'ouverture 10 prend appui contre le corps de préhension 2 et contre une extrémité d'appui 11 de l'organe mobile formant pince 4, opposée à l'extrémité de serrage 5, et sollicite en permanence l'organe mobile formant pince 4 vers sa position ouverte.

Le dispositif de préhension amovible 1 comprend des moyens de déplacement 6 qui sont adaptés à déplacer l'organe mobile formant pince 4 par rapport au corps de préhension 2.

Ces moyens de déplacement 6 comprennent un levier 7 qui est monté mobile en rotation autour d'un axe de rotation 8 par rapport au corps de préhension 2 entre une position déployée (figure 3) et une positon escamotée (figure 2). L'axe de rotation 8 est normal à la direction longitudinale du corps de préhension 2 et est situé à proximité de l'organe fixe formant pince 3 et à proximité d'une première extrémité du levier 7.

Dans le présent exemple, quand le levier 7 est dans sa position escamotée, il est complètement située dans le corps de préhension 2 de façon à ne pas pouvoir être manoeuvré par l'utilisateur.

Quand le levier 7 est en position déployée, l'organe mobile formant pince 4 est en position ouverte, et quand il est en position escamotée, l'organe mobile formant pince 4 est en position fermée.

Les moyens de déplacement 6 comprennent aussi un moyen de transmission 9 qui s'étend entre le levier 7 et l'organe mobile formant pince 4 et qui est adapté à déplacer l'organe mobile formant pince 4 en translation quand le levier 7 est pivoté.

Dans l'exemple illustré aux figures 1 à 3, le moyen de transmission 9 est une bielle 9, et les moyens de déplacement 6 sont agencés selon une relation en genouillère : les moyens de déplacement 6 sont conformés de sorte que, le levier 7 est dans une position d'équilibre stable quand il est en position déployée et quand il est en position escamotée, et il passe par une position d'équilibre instable (définie par la droite d'équilibre des moyens de déplacement 6) quand il passe de l'une à l'autre de ses deux positions d'équilibre stable.

Par rapport à l'organe mobile formant pince 4, la bielle 9 est mobile en rotation autour d'un axe de pivotement 12 qui est adjacent à l'extrémité d'appui 11 de l'organe mobile formant pince 4 et à une première extrémité de la bielle 9.

Par rapport au levier 7, la bielle 9 est mobile en rotation autour d'un arbre 13. Afin de permettre la relation en genouillère, l'arbre 13 est monté mobile en translation dans une fente 14 qui est réalisée dans la bielle 9 et qui s'étend dans la direction longitudinale de celle-ci. L'arbre 13 est mobile entre une position d'équilibre instable dans laquelle l'arbre 13 est situé sur la droite d'équilibre du mécanisme à genouillère qui est définie par l'axe de rotation 8 et l'axe de pivotement 12 et une position d'équilibre stable dans laquelle le levier 7 est soit dans sa position déployée (l'arbre 13 étant situé du côté dit d'ouverture de la droite d'équilibre), soit dans sa position escamotée (l'arbre 13 étant situé du côte dit de fermeture de la droite d'équilibre).

Un ressort de genouillère 15 sollicite en permanence l'arbre 13 en direction de sa position d'équilibre stable.

Quand l'arbre 13 est situé du côté d'ouverture de la droite d'équilibre, le ressort d'ouverture 10 sollicite, d'une part, l'organe mobile formant pince 4 vers sa position ouverte et, d'autre.part, le levier 7 vers sa position déployée par l'intermédiaire de la bielle 9.

Quand l'arbre 13 est situé du côté de fermeture de la droite d'équilibre, le ressort d'ouverture 10 sollicite le levier 7 vers sa position escamotée et plaque, d'une part, le levier 7 contre le corps de préhension 2, et, d'autre part, la bielle 9 contre l'organe mobile formant pince 4, le ressort de genouillère 15 se trouvant orienté selon une direction très proche de celle du ressort d'ouverture 10. De ce fait, le ressort de genouillère 15 qui sollicite l'arbre 13 en direction de sa position d'équilibre, impose à l'organe mobile formant pince 4 une translation vers sa position fermée, malgré la présence du ressort d'ouverture 10.

Quand un utilisateur veut pincer le rebord d'un récipient, il positionne le rebord entre l'organe fixe formant pince 3 et l'extrémité de serrage 5 de l'organe mobile formant pince 4 en position ouvert, et il fait pivoter le levier 7 de sa position déployée vers sa position escamotée. La rotation du levier 7 entraîne la rotation de la bielle 9 et la translation de l'organe mobile formant pince 4, l'arbre 13 franchissant alors la droite d'équilibre du mécanisme à genouillère, ce qui permet de réaliser un pincement stable du rebord du récipient.

La mobilité de l'arbre 13 dans la fente 14 permet d'ajuster la distance séparant l'extrémité de serrage 5 de l'organe mobile formant pince 4 en position fermée et l'organe fixe formant pince 3 à l'épaisseur du rebord du récipient.

La plage des distances séparant l'extrémité de serrage 5 de l'organe mobile formant pince 4 en position fermée et l'organe fixe formant pince 3 est sensiblement inférieure à l'amplitude de mouvement de l'arbre 13 dans la fente 14 de façon à permettre à l'arbre 13 de passer la droite d'équilibre et à avoir un pincement stable.

Selon le mode de réalisation illustré aux figures 1 à 3, l'arbre 13 est situé à proximité de la deuxième extrémité du levier 7 qui est opposée à la première extrémité proche de l'axe de rotation 8. La fente 14 est réalisée à proximité de la deuxième extrémité de la bielle 9 qui est opposée à la première extrémité proche de l'axe de pivotement 12, l'arbre 13 étant sollicité par le ressort de genouillère 15 vers l'extrémité longitudinale de la fente 14 qui est la plus proche de la deuxième extrémité de la bielle 9.

Par cet agencement particulier des moyens de déplacement 6, le dispositif de préhension 1 peut pincer de façon sûre des rebords de récipient dont l'épaisseur peut varier selon une plage relativement importante (entre 0,5 et 3,5 mm)

De plus, l'utilisation d'un ressort à boudin logé dans la bielle 9 comme ressort de genouillère 15 permet d'éviter tout risque de détérioration du mécanisme à genouillère, bien que la plage des épaisseurs du rebord de récipient pouvant être pincé soit importante.

Par ailleurs, afin de faciliter la prise en main du dispositif de préhension 1, même quand le levier 7 est en position déployée, le levier 7 a une longueur réduite telle que qu'un utilisateur qui a en main le dispositif de préhension 1, a son index et son majeur disposés contre le levier 7 et son annulaire et son auriculaire disposés contre le corps de préhension. De ce fait, l'utilisateur peut libérer le levier 7 de l'emprise réalisée par l'index et le majeur tout en conservant l'annulaire et l'auriculaire pour maintenir le corps de préhension 2. De façon typique, la longueur du levier correspond à la largeur de trois doigts serrés les uns contre les autres (ou environ 7 cm à partir de l'axe de rotation 8, ou encore, environ 6 cm pour la partie du levier pivotant hors du corps de préhension 2.

En outre, l'utilisation d'une bielle 9 de longueur réduite permet d'avoir un levier 7 ayant une faible amplitude de mouvement, rendant encore plus aisée la prise en main du dispositif de préhension 1, même quand le levier 7 est en position déployée.

Ainsi, l'utilisateur n'a pas à changer de prise en main quand le levier 7 passe de sa position déployée vers sa position escamotée, et inversement.

Avantageusement, le levier 7 et la bielle 9 comprennent des parois verticales agencées de sorte que, même quand le levier 7 est en position déployée, l'ensemble du mécanisme est masqué et protégé de tout encrassement.

Le dispositif de préhension amovible 1 comporte des moyens d'actionnement adaptés à permettre le déploiement du levier 7.

Le dispositif de préhension amovible 1 comporte des moyens de verrouillage 33, distincts des moyens de déplacement 6, et mobiles entre une position activée et une position de repos, dite de verrouillage, dans laquelle les moyens de verrouillage 33 sont adaptés à empêcher la rotation du levier 7 de sa position escamotée vers sa position déployée.

Quand ils sont en position activée, les moyens de verrouillage 33 sont adaptés à permettre au levier 7 de passer de l'une à l'autre de ses deux positions stables, notamment quand l'utilisateur veut pincer ou libérer un récipient, et quand ils sont en position de verrouillage, les moyens de verrouillage 33 sont adaptés à verrouiller le levier 7 dans sa position stable escamotée contre tout mouvement de rotation et à empêcher tout franchissement de son point d'équilibre instable.

Dans l'exemple illustré aux figures 1 à 3, les moyens de verrouillage 33 sont montés de façon mobile en translation sur le corps de préhension 2 selon une direction sensiblement parallèle à la direction longitudinale au corps de préhension 2.

Les moyens de verrouillage 33 sont sollicités vers leur position de verrouillage par tout moyen de rappel tel qu'un ressort de verrouillage 17 prenant appui contre le corps de préhension 2 et les moyens de verrouillage 33.

Comme on peut le voir aux figures 1 et 2, le levier 7 comprend un crochet 22, et les moyens de verrouillage 33 comprennent une patte 25 dans laquelle est réalisée une ouverture 23 dans laquelle le crochet 22 s'engage quand le levier 7 est en position escamotée et les moyens de verrouillage 33 sont en position de verrouillage.

L'engagement du crochet 22 dans l'ouverture 23 se fait par encliquetage: quand le levier 7 est pivoté de sa position déployée vers sa position escamotée, une surface supérieure 24 du crochet 22 vient en butée contre la patte 25 et les moyens de verrouillage 33 sont entraînés en translation en direction de leur position activée jusqu'à une position d'encliquetage dans laquelle le crochet 22 est au niveau de l'ouverture 23. A cette position d'encliquetage, le ressort de verrouillage 17 entraîne en translation les moyens de verrouillage 33 en direction de leur position de verrouillage, réalisant l'encliquetage.

Les moyens de verrouillage 33 permettent donc de verrouiller le levier 7 dans sa position escamotée. Cet agencement permet d'éviter toute ouverture intempestive due à une manipulation brusque du dispositif de préhension amovible 1 qui pourrait faire en sorte que, par l'à-coup, l'arbre 13 franchisse la droite d'équilibre.

Dans l'exemple illustré aux figures 1 à 3, les moyens de verrouillage 33 sont plus proche des organes formant pince 3,4 quand ils sont en position de verrouillage que quand ils sont en position activée. Le crochet 22 est orienté dans la direction opposée de l'axe de rotation 8. La patte 25 est située à la hauteur du crochet 22 quand le levier 7 est verrouillé, et elle est inclinée de sorte que sa face faisant face à l'axe de rotation 8 forme un angle obtus avec la direction longitudinale du corps de préhension 2.

De plus, les moyens de verrouillage 33 comprennent un bouton d'activation 20 qui est adapté à être manoeuvré par l'utilisateur et qui fait saillie à la surface du dispositif de préhension amovible 1 opposée à celle à laquelle le levier 7 est fixé. L'organe mobile formant pince 4 présente une rainure 21 au travers de laquelle le bouton d'activation 20 est solidarisé à la patte 25 (le bouton d'activation 20 et la patte 25 sont situés de part et d'autre de l'organe mobile formant pince 4) de sorte que le mouvement de l'organe mobile formant pince 4 ne soit pas gêné par les moyens de verrouillage 33, et réciproquement.

Quand l'utilisateur veut faire passer le levier 7 de sa position escamotée à sa position déployée afin de libérer le récipient des organes formant pince 3,4, il impose aux moyens de verrouillage 33, par l'intermédiaire du bouton d'activation 20, une translation vers leur position activée. Dès que les moyens de verrouillage 33 sont en position d'encliquetage, le crochet 22 n'est plus engagé dans l'ouverture 23 et le levier 7 peut être pivoté vers sa position déployée par les moyens d'actionnement.

Le bouton d'activation 20 permet à l'utilisateur de déverrouiller le levier 7 sans avoir à changer de prise de main, et uniquement à l'aide du pouce. De plus, comme les moyens de verrouillage 33 sont plus proche des organes formant pince 3,4 quand ils sont en position de verrouillage que quand ils sont en position activée, pour déverrouiller le levier 7, l'utilisateur doit tirer le bouton de commande 20 vers lui, et non pas le pousser vers le récipient, ce qui permet d'éviter tout déverrouillage inopportun du bouton de commande.

Par ailleurs, dans l'exemple illustré aux figures 1 à 3, les moyens de verrouillage 33 en position activée sont adaptés à faire passer le levier 7 de sa position escamotée à sa position déployée. De ce fait, les moyens de verrouillage 33 se comportent aussi comme des moyens d'actionnement.

Comme on peut le voir aux figures 2 et 3, le levier 7 comprend une surface d'appui 19, et les moyens de verrouillage 33 comprennent un élément formant plan incliné 18 qui est adapté à venir en butée contre une surface d'appui 19 quand le levier 7 est en position escamotée et les moyens de verrouillage 33 sont en position activée.

Le plan incliné 18 et la surface d'appui 19 sont conformés de telle sorte que, quand les moyens de verrouillage 33 sont en position activée, le plan incliné 18 vient buter contre la surface d'appui 19 et impose au levier 7 un mouvement de pivotement autour de l'axe de rotation 8 vers sa position déployée. Le pivotement du levier 7 imposé par le plan incliné est tel que le point d'équilibre du mécanisme à genouillère est franchi, c'est à dire que l'arbre 13 traverse la droite d'équilibre. Une fois l'équilibre franchi, le ressort d'ouverture 10 sollicite le levier 7 vers sa position déployée et l'organe mobile formant pince 4 vers sa position ouverte.

Le plan incliné 18 est disposé, par rapport à la direction longitudinale du corps de préhension 2, entre l'axe de rotation 8 et la surface d'appui 19 qui fait face à l'axe de rotation 8.

Les moyens de verrouillage permettent donc à l'utilisateur de déverrouiller le levier 7 puis de la faire passer de sa position escamotée à sa position déployée sans avoir à changer de prise de main, et uniquement à l'aide du pouce.

Dans l'exemple illustré aux figures 1 à 3, le plan incliné 18 est solidaire de la patte 25 et le crochet 22 est solidaire de la surface d'appui 19. Le plan incliné 18, la surface d'appui 19, le crochet 22 et la patte 25 sont agencés de telle sorte que le crochet 22 est désengagé de l'ouverture 23 par translation des moyens de verrouillage 33 vers leur position activée avant que le plan incliné 18 vienne en butée contre la surface d'appui 19 : le crochet 22 est plus éloigné de l'axe de rotation 8 que ne l'est la surface d'appui 19.

Ainsi, quand l'utilisateur veut faire passer le levier 7 de sa position escamotée à sa position déployée afin de libérer le récipient des organes formant pince 3,4, il impose aux moyens de verrouillage 33, par l'intermédiaire du bouton d'activation 20, une translation jusqu'à leur position activée. Lors de cette translation, les moyens de déverrouillage 16 passent par leur position d'encliquetage dans laquelle le crochet 22 n'est plus engagé dans l'ouverture 23. De ce fait, le levier 7 est déverrouillé avant que le plan incliné 18 vienne en butée contre la surface d'appui 19, ce qui permet au levier 7 de pivoter vers sa position escamotée et à l'organe mobile formant pince 4 de passer dans sa position ouverte.

Le bouton d'activation 20 permet donc à l'utilisateur de manoeuvrer à la fois les moyens de verrouillage 33 et les moyens d'actionnement qui sont constitués par les moyens de verrouillage 33.

Bien évidemment, la présente invention n'est pas limité au mode de réalisation décrit de façon détaillée ci-dessus.

Il serait possible de réaliser un dispositif de préhension amovible ne comprenant pas de moyens d'activation solidaire des moyens de verrouillage, ou dont le moyen de transmission ne serait pas une bielle.

Il serait aussi possible que les moyens de déplacement ne soient pas adaptés à ajuster la distance séparant les deux organes formant pince en position fermée à l'épaisseur du récipient pincé.

Il serait aussi possible d'avoir un dispositif de préhension amovible, comprenant deux organes formant pince montés sur un corps de préhension, l'un des organes formant pince étant mobile en translation par rapport au corps de préhension, selon une direction sensiblement parallèle à la direction longitudinale du corps de préhension, entre une position ouverte et une position fermée dans laquelle les organes formant pince sont adaptés à pincer un rebord du récipient, le dispositif comprenant aussi des moyens de déplacement qui sont adaptés à déplacer les organes formant pince l'un par rapport à l'autre, qui comportent un levier monté mobile en rotation par rapport au corps de préhension entre une position déployée et une positon escamotée dans laquelle l'organe mobile formant pince est en position fermée, et un moyen de transmission s'étendant entre le levier et l'organe mobile formant pince et adapté à déplacer l'organe mobile formant pince en translation quand le levier est pivoté, caractérisé en ce que le levier a une faible longueur (tel que décrit plus haut, c'est à dire permettant la prise en main du corps de préhension derrière le levier par au moins l'auriculaire et l'annulaire), ce qui permet de ne pas à avoir à changer de prise de main que le levier soit dans sa position déployée ou dans sa position escamotée. De préférence, les moyens de transmission (telle que la bielle) sont articulés à l'extrémité du levier opposée à l'extrémité par laquelle il est articulé au corps de préhension. Un tel dispositif de préhension peut évidemment être muni des différentes caractéristiques particulières énoncées dans la présente demande.

## Revendications

1. Dispositif de préhension amovible (1) pour récipient, comprenant
- deux organes formant pince (3,4) montés sur un corps de préhension (2), l'un des organes formant pince (4) étant mobile en translation par rapport au corps de préhension (2), selon une direction sensiblement parallèle à la direction longitudinale du corps de préhension (2), entre une position ouverte et une position fermée dans laquelle les organes formant pince (3,4) sont adaptés à pincer un rebord du récipient,
- des moyens de déplacement (6) qui sont adaptés à déplacer les organes formant pince (3,4) l'un par rapport à l'autre, qui comportent un levier (7) monté mobile en rotation par rapport au corps de préhension (2) entre une position déployée et une positon escamotée dans laquelle l'organe mobile formant pince (4) est en position fermée, et un moyen de transmission (9) s'étendant entre le levier (7) et l'organe mobile formant pince (4) et adapté à déplacer l'organe mobile formant pince (4) en translation quand le levier (7) est pivoté, et qui sont conformés de sorte que le levier (7) est dans une position d'équilibre stable tant en position escamotée qu'en position déployée, et passe par une position intermédiaire d'équilibre instable quand il pivote de l'une à l'autre de ses deux positions d'équilibre stable, et
- des moyens de verrouillage (33) distincts des moyens de déplacement (6), mobiles entre une position activée et une position de verrouillage dans laquelle ils sont adaptés à gêner le pivotement involontaire du levier (7) jusqu'à sa position d'équilibre instable, **caractérisé en ce que** les moyens de verrouillage (33) sont adaptés à empêcher tout pivotement du levier (7) jusqu'à sa position d'équilibre instable, sont sollicités en permanence vers leur position de verrouillage par un moyen de rappel (17), et comprennent un bouton d'activation (20) adapté à être manoeuvré manuellement pour permettre l'entraînement des moyens de verrouillage (33) de leur position de verrouillage à leur position activée dans laquelle le levier (7) peut passer de sa position escamotée à sa position déployée.

2. Dispositif de préhension amovible (1) selon la revendication 1, **caractérisé en ce que** les moyens de verrouillage (33) sont montés en translation sur le corps de préhension (2) selon une direction sensiblement parallèle à la direction longitudinale du corps de préhension (2).

3. Dispositif de préhension amovible (1) selon l'une des revendication 1 ou 2, **caractérisé en ce que** les moyens de verrouillage (33) sont plus proches des organes formant pince (3,4) quand ils sont en position de verrouillage que quand ils sont en position activée.

4. Dispositif de préhension amovible (1) selon l'une des revendications 1 à 3, **caractérisé en ce que** les moyens de verrouillage (33) coopèrent avec le levier (7) par encliquetage.

5. Dispositif de préhension amovible (1) selon l'une des revendications 1 à 4, **caractérisé en ce que** les moyens de verrouillage (33), comprennent une patte (25) dans laquelle est -réalisée une ouverture (23) qui est adaptée à recevoir un crochet (22) du levier (7) en position escamotée quand les moyens de verrouillage (33) sont en position de verrouillage, et à être libérée du crochet (22) quand les moyens de verrouillage (33) sont en position activée.

6. Dispositif de préhension amovible (1) selon la revendication 5, **caractérisé en ce que** le crochet (22) comprend une surface supérieure (24) adaptée, quand le levier (7) est pivoté vers sa position escamotée, à entraîner les moyens de verrouillage (33) en direction de leur position activée jusqu'à une position permettant l'encliquetage du crochet (22) dans l'ouverture (23).

7. Dispositif de préhension amovible (1) selon l'une des revendications 1 à 6, **caractérisé en ce que** le bouton d'activation (20) fait saillie à une surface du corps de préhension amovible (2) opposée à celle par laquelle le levier (7) est fixé.

8. Dispositif de préhension amovible (1) selon les revendications 5 et 7, **caractérisé en ce que** l'organe mobile formant pince (4) présente une rainure (21) au travers de laquelle le bouton d'activation (20) est solidarisé à la patte (25).

9. Dispositif de préhension amovible (1) selon l'une des revendications 1 à 8, **caractérisé en ce que** les moyens de verrouillage (33) en position activée sont adaptés à faire passer le levier (7) de sa position escamotée à sa position déployée.

10. Dispositif de préhension amovible (1) selon la revendication 9, **caractérisé en ce que** les moyens de verrouillage (33) comprennent un élément formant plan incliné (18) adapté, d'une part, à venir en butée contre une surface d'appui (19) du levier (7) quand les moyens de verrouillage (33) sont en position activée, et, d'autre part, à imposer au levier (7) un mouvement de rotation de la position escamotée jusqu'à une position où le levier (7) est entraîné jusqu'à sa position déployée par le seul moyen de transmission (9).

11. Dispositif de préhension amovible (1) selon la revendication 10, **caractérisé en ce que** le crochet (22) est adapté à être désengagé de l'ouverture (23) par la translation du moyen de verrouillage (33) vers sa position activée avant que le plan incliné (18) vienne en butée contre la surface d'appui (19).

12. Dispositif de préhension amovible (1) selon l'une des revendications 1 à 11, **caractérisé en ce que** les moyens de déplacement (6) sont adaptés à ajuster à l'épaisseur du récipient pincé la distance séparant les deux organes formant pince (3,4) en position fermée.

13. Dispositif de préhension amovible (1) selon la revendication 12, **caractérisé en ce qu'**un ressort (15) adapté à agir sur l'organe mobile (4) de façon à permettre l'ajustement de la distance séparant les deux organes formant pince (3,4), est logé dans le moyen de transmission (9).

14. Dispositif de préhension amovible (1) selon l'une des revendications 1 à 13, **caractérisé en ce que** les moyens de transmission (9) sont formées par une bielle (9) qui est monté mobile en rotation par rapport au levier (7) et par rapport à l'organe mobile formant pince (4).

15. Dispositif de préhension amovible (1) selon la revendication 14, **caractérisé en ce que** la bielle (9) est monté rotative sur le levier (7) par l'intermédiaire d'un arbre. (13) qui est situé à proximité de l'extrémité du levier (7) opposée à l'extrémité par laquelle le levier (7) est relié au corps de préhension (2).

16. Dispositif de préhension amovible (1) selon l'une des revendications 1 à 15, **caractérisé en ce que** la longueur du levier (7) correspond à la largueur de trois doigts serrés les uns contre les autres.

17. Dispositif de préhension amovible (1) selon l'une des revendications 1 à 16, **caractérisé en ce que** les longueurs du levier (7) et du corps de préhension (2) sont telles qu'un utilisateur ayant en main le dispositif de préhension (1), a son index et son majeur disposés contre le levier (7) et son annulaire et son auriculaire disposés contre le corps de préhension (2).

## Claims

1. A removable gripping device (1) for a container, comprising:
- two members forming a gripper (3, 4) mounted on a gripping body (2), in which one of the members forming a gripper (4) is free to move in translation with respect to the gripping body (2), along a direction approximately parallel to the longitudinal direction of the gripping body (2) between an open position and a closed position in which the members forming a gripper (3, 4) are adapted to grip an edge of the container,
- displacement means (6) adapted to displacing the members forming a gripper (3, 4) with respect to each other, comprising a lever (7) free to move in rotation with respect to the gripping body (2) between an extended position and a retracted position in which the mobile member forming a gripper (4) is in a closed position, and a transmission means (9) extending between the lever (7) and the mobile member forming a gripper (4) adapted to displacing the mobile member forming a gripper (4) in translation when the lever (7) is pivoted, said displacement means (6) being shaped such that the lever (7) is in a stable equilibrium position when it is in the extended position and when it is in the retracted position, and it passes through an unstable equilibrium position when it passes from one of these two stable equilibrium positions to the other, and
- locking means (33) separate from the displacement means (6), free to move between an active position and a locked position in which they prevent the lever (7) from accidentally rotating to its unstable equilibrium position, **characterized in that** the locking means (33) are adapted to prevent the lever (7) from rotating to its unstable equilibrium position, are pushed towards their locking position by a return means (17) and comprise an activation button (20) adapted to be maneuvered manually to enable the locking means (33) to move from their locked position to their active position in which the lever (7) can change from its retracted position to its extended position.

2. Removable gripping device (1) according to claim 1, **characterized in that** the locking means (33) are installed in translation on the gripping body (2) along a direction approximately parallel to the longitudinal direction of the gripping body (2).

3. Removable gripping device (1) according to either claim 1 or 2, **characterized in that** the locking means (33) are closer to the members forming the gripper (3, 4) when they are in their locked position than when they are in their active position.

4. Removable gripping device (1) according to one of claims 1 to 3, **characterized in that** the locking means (33) cooperate with the lever (7) by click fitting.

5. Removable gripping device (1) according to one of claims 1 to 4, **characterized in that** the locking means (33) comprise a tab (25) in which an opening (23) is formed, opening (23) in which a hook (22) of the lever (7) is engaged when their locking means (33) are in their locked position, and is released from the hook (22) when the locking means (33) are in their active position.

6. Removable gripping device (1) according to claim 5, **characterized in that** the hook (22) comprises an upper surface (24) adapted to entrain the locking means (33) from their active position towards a position enabling click fitting of the hook (22) in the opening (23), when the lever (7) is pivoted into its retracted position.

7. Removable gripping device (1) according to one of claims 1 to 6, **characterized in that** the activation button (20) projects from a surface of the removable gripping body (2) opposite the surface on which the lever (7) is fixed.

8. Removable gripping device (1) according to claims 5 and 7, **characterized in that** the mobile member forming a gripper (4) has a groove (21) through which the activation button (20) is solidarized to the tab (25).

9. Removable gripping device (1) according to one of claims 1 to 8, **characterized in that** the locking means (33) in their active position are adapted to move the lever (7) from its retracted position to its extended position.

10. Removable gripping device (1) according to claim 9, **characterized in that** the locking means (33) comprise an element forming an inclined plane (18) adapted firstly to abut against a contact surface (19) of the lever (7) when the locking means (33) are in their active position, and secondly to impose a pivoting movement on the lever (7), from its retracted position to a position in which the lever (7) is moved to its extended position by the transmission means (9) alone.

11. Removable gripping device (1) according to claim 10, **characterized in that** the hook (22) is adapted to be released from the opening (23) by translation of the locking means (33) towards their active position before the inclined plane (18) abuts against the contact surface (19).

12. Removable gripping device (1) according to one of claims 1 to 11, **characterized in that** the displacement means (6) are adapted to adjust the distance separating the two members forming the gripper (3, 4) in the closed position, to the thickness of the gripped container.

13. Removable gripping device (1) according to claim 12, **characterized in that** a spring (15) adapted to act on the mobile member (4) so as to enable adjustment of the distance separating the two members forming the gripper (3, 4) is housed in the transmission means (9).

14. Removable gripping device (1) according to one of claims 1 to 13, **characterized in that** the transmission means (9) are formed by a connecting rod (9) free to rotate with respect to the lever (7) and to the mobile member forming the gripper (4).

15. Removable gripping device (1) according to claim 14, **characterized in that** the connecting rod (9) is free to move in rotation with respect to the lever (7), under the control of a shaft (13) that is located close to the end of the lever (7) opposite the end at which the lever (7) is hinged to the gripping body (2).

16. Removable gripping device (1) according to one of claims 1 to 15, **characterized in that** the length of the lever (7) corresponds to the width of three fingers in contact with each other.

17. Removable gripping device (1) according to one of claims 1 to 16, **characterized in that** the lengths of the lever (7) and the gripping body (2) are such that a user holding the gripping device (1) in his or her hand will have his or her index finger and middle finger in contact with the lever (7), and the ring finger and little finger in contact with the gripping body (2).

## Patentansprüche

1. Abnehmbare Greifvorrichtung (1) für einen Behälter, mit
- zwei Zangenelementen (3, 4), die an einem Greifkörper (2) angebracht sind, wobei eines der Zangenelemente (4) in Bezug auf den Greifkörper (2) verschiebbar ist in einer Richtung im Wesentlichen parallel zur Längsrichtung des Greifkörpers (2) zwischen einer Öffnungsposition und einer Schließposition, in welcher die Zangenelemente (3, 4) so ausgelegt sind, dass diese einen Rand des Behälters einklemmen,
- einer Verstelleinrichtung (6), die so ausgebildet ist, dass diese die Zangenelemente (3, 4) in Bezug zueinander verschiebt, die einen Hebel (7) umfasst, der drehbeweglich in Bezug zu dem Greifkörper (2) zwischen einer eingefahrenen Position und einer ausgefahrenen Position montiert ist, in welcher sich das bewegliche Zangenelement (4) in einer Schließposition befindet, und ein Übertragungselement (9) umfasst, das sich zwischen dem Hebel (7) und dem beweglichen Zangenelement (4) erstreckt und so ausgelegt ist, dass dieses das bewegliche Zangenelement (4) translatorisch verschiebt, wenn der Hebel (7) geschwenkt wird, und die derart geformt ist, dass sich der Hebel (7) in einer stabilen Gleichgewichtslage befindet, sowohl in der ausgefahrenen Position als auch in der eingefahrenen Position, und eine dazwischen liegenden instabile Gleichgewichtslage durchläuft, wenn er aus der einen in die andere seiner beiden stabilen Gleichgewichtslagen geschwenkt wird, und
- eine Verriegelungseinrichtung (33), die von der Verstelleinrichtung (6) getrennt ist, die beweglich ist zwischen einer aktivierten Position und einer Verriegelungsposition, in welcher sie so ausgelegt ist, dass sie die unbeabsichtigte Schwenkung des Hebels (7) bis in seine instabile Gleichgewichtslage behindert,
**dadurch gekennzeichnet, dass** die Verriegelungseinrichtung (33) so ausgebildet ist, dass diese jede Schwenkung des Hebels (7) bis in seine instabile Gleichgewichtslage verhindert, durch ein Rückholelement (17) in ihre Verriegelungsposition vorgespannt ist, und einen Aktivierungsknopf (20) umfasst, der so ausgebildet ist, dass dieser manuell betätigt wird, um den Antrieb der Verriegelungseinrichtung (33) aus ihrer Verriegelungsposition in ihre aktivierte Position zu ermöglichen, in welcher der Hebel (7) von seiner ausgefahrenen Position in seine eingefahrene Position gelangen kann.

2. Abnehmbare Greifvorrichtung (1) nach Anspruch 1, **dadurch gekennzeichnet, dass** die Verriegelungseinrichtung (33) auf dem Greifkörper (2) in einer im Wesentlichen parallelen Richtung zur Längsrichtung des Greifkörpers (2) verschiebbar angebracht ist.

3. Abnehmbare Greifvorrichtung (1) nach einem der Ansprüche 1 oder 2, **dadurch gekennzeichnet, dass** die Verriegelungseinrichtung (33) näher an den Zangenelementen (3, 4) liegt, wenn sie sich in der Verriegelungsposition befindet, als wenn sie sich in der aktivierten Position befände.

4. Abnehmbare Greifvorrichtung (1) nach einem der Ansprüche 1 bis 3, **dadurch gekennzeichnet, dass** die Verriegelungseinrichtung (33) mit dem Hebel (7) mittels Einrastung zusammenwirkt.

5. Abnehmbare Greifvorrichtung (1) nach einem der Ansprüche 1 bis 4, **dadurch gekennzeichnet, dass** die Verriegelungseinrichtung (33) eine Klaue (25) aufweist, in welcher eine Öffnung (23) ausgebildet ist, die so ausgelegt, dass diese einen Haken (22) des Hebels (7) in ausgefahrener Position aufnimmt, wenn sich die Verriegelungseinrichtung (33) in der Verriegelungsposition befindet, und vom Haken (22) befreit ist, wenn sich die Verriegelungseinrichtung (33) in der aktivierten Position befindet.

6. Abnehmbare Greifvorrichtung (1) nach Anspruch 5, **dadurch gekennzeichnet, dass** der Haken (22) eine Oberseite (24) umfasst, die so ausgebildet ist, dass sie, wenn der Hebel (7) in seine ausgefahrene Position geschwenkt wird, die Verriegelungseinrichtung (33) in Richtung von ihrer aktivierten Position bis in eine Position mitnimmt, die eine Einrastung des Hakens (22) in der Öffnung (23) erlaubt.

7. Abnehmbare Greifvorrichtung (1) nach einem der Ansprüche 1 bis 6, **dadurch gekennzeichnet, dass** der Aktivierungsknopf (20) an eine Oberfläche des abnehmbaren Greifkörpers (2) gegenüber derjenigen, durch welche der Hebel (7) fixiert ist, vorsteht.

8. Abnehmbare Greifvorrichtung (1) nach den Ansprüchen 5 und 7, **dadurch gekennzeichnet; dass** das bewegliche Zangenelement (4) einen Schlitz (21) aufweist, durch welchen hindurch der Aktivierungsknopf (20) fest mit der Klaue (25) verbunden ist.

9. Abnehmbare Greifvorrichtung (1) nach einem der Ansprüche 1 bis 8, **dadurch gekennzeichnet, dass** die Verriegelungseinrichtung (33) in der aktivierten Position so ausgelegt ist, dass diese den Hebel (7) aus seiner ausgefahrenen Position in seine eingefahrene Position gelangen lässt.

10. Abnehmbare Greifvorrichtung (1) nach Anspruch 9, **dadurch gekennzeichnet, dass** die Verriegelungseinrichtung (33) ein Element (18) mit schräger Ebene umfasst, das einerseits so ausgebildet ist, dass es an eine Anschlagfläche (19) des Hebels (7) in Anschlag kommt, wenn sich die Verriegelungseinrichtung (33) in der aktivierten Position befindet, und andererseits dem Hebel (7) eine Drehbewegung aus der ausgefahrenen Position bis in eine Position, in welcher der Hebel (7) nur durch das Übertragungselement (9) bis in seine eingefahrene Position mitgenommen wird, aufzwingt.

11. Abnehmbare Greifvorrichtung (1) nach Anspruch 10, **dadurch gekennzeichnet, dass** der Haken (22) so ausgebildet ist, dass dieser von der Öffnung (23) durch die Verschiebung der Verriegelungseinrichtung (33) in ihre aktivierte Position gelöst wird, bevor die schräge Ebene (18) an der Anschlagfläche (19) in Anschlag kommt.

12. Abnehmbare Greifvorrichtung (1) nach einem der Ansprüche 1 bis 11, **dadurch gekennzeichnet, dass** die Verstelleinrichtung (6) so ausgebildet ist, dass der die beiden Zangenelemente (3, 4) in der geschlossenen Position trennende Abstand auf die Dicke des Behälters eingestellt ist.

13. Abnehmbare Greifvorrichtung (1) nach Anspruch 12, **dadurch gekennzeichnet, dass** eine Feder (15), die so ausgelegt ist, dass diese auf das bewegliche Element (4) in der Weise einwirkt, dass eine Einstellung des die zwei Zangenelemente (3, 4) trennenden Abstands möglich wird, in dem Übertragungselement (9) aufgenommen ist.

14. Abnehmbare Greifvorrichtung (1) nach einem der Ansprüche 1 bis 13, **dadurch gekennzeichnet, dass** die Übertragungseinrichtung (9) durch ein Zwischenglied (9) gebildet ist, das drehbeweglich in Bezug zu dem Hebel (7) und in Bezug zu dem Zangenelement (4) angebracht ist.

15. Abnehmbare Greifvorrichtung (1) nach Anspruch 14, **dadurch gekennzeichnet, dass** das Zwischenglied (9) mittels einer Welle (13) drehend auf dem Hebel (7) angebracht ist, welche in der Nähe eines Endes des Hebels (7) liegt, das dem Ende entgegengesetzt ist, mit welchem der Hebel (7) mit dem Greifkörper (2) verbunden ist.

16. Abnehmbare Greifvorrichtung (1) nach einem der Ansprüche 1 bis 15, **dadurch gekennzeichnet, dass** die Länge des Hebels (7) der Breite von drei zusammengehaltenen Fingern entspricht.

17. Abnehmbare Greifvorrichtung (1) nach einem der Ansprüche 1 bis 16, **dadurch gekennzeichnet, dass** die Längen des Hebels (7) und des Greifkörpers (2) derart sind, dass ein Benutzer, der die Greifvorrichtung (1) in der Hand hat, seinen Zeigefinger und seinen Mittelfinger an dem Hebel (7) liegen hat und seinen Ringfinger und seinen kleinen Finger an dem Greifkörper (2) zu liegen hat.
